# EUROPÄISCHE PATENTSCHRIFT

(11) **EP 2 774 431 B1**
(45) Veröffentlichungstag und Bekanntmachung des Hinweises auf die Patenterteilung: **16.12.2015**
(21) Anmeldenummer: 12791687.2
(22) Anmeldetag: 10.10.2012
(51) Int. Cl.: H04W 56/00

(54) **VERFAHREN ZUM ÜBERTRAGEN VON INFORMATIONEN ZUR SYNCHRONISIERUNG EINER ANWENDUNG ZWISCHEN EINEM MOBILEN TELEFON UND EINEM EMPFÄNGER.**
METHOD FOR TRANSMITTING INFORMATION FOR SYNCHRONISATION OF AN APPLICATION BETWEEN A MOBILE TELEPHONE AND A RECEIVER.
MÉTHODE DE TRANSMISSION D'INFORMATIONS DE SYNCHRONISATION D'UNE APPLICATION ENTRE UN TÉLÉPHONE MOBILE ET UN RÉCEPTEUR.

(30) Priorität: 31.10.2011 DE 102011117283
(43) Veröffentlichungstag der Anmeldung: 10.09.2014
(73) Patentinhaber: Friends4media GmbH, 93049 Regensburg (DE)
(72) Erfinder: UNSICKER, ANdreas, 93049 Regensburg (DE)
(74) Vertreter: Jungblut & Seuss
(86) Internationale Anmeldenummer: PCT/DE2012/000985
(87) Internationale Veröffentlichungsnummer: WO 2013/064133

(56) Entgegenhaltungen:
- EP-A1- 1 852 981
- WO-A2-02/45290
- GB-A- 2 413 036
- US-A1- 2009 125 630

## Beschreibung

### Gebiet der Erfindung

Die Erfindung betrifft ein Verfahren zur Übertragung einer Information zwischen einem Versender und einem Recipienten mittels eines mobilen Telefons, wobei das Telefon eine interne Gerätezeit aufweist, wobei der Recipient Mittel zum Empfang von von dem mobilen Telefon versandten Datenströmen, Mittel zum Versenden von Datenströmen an das mobile Telefon, sowie ein internes Zeitnormal aufweist. Die Erfindung betrifft desweiteren ein Programm codierend für ein solches Verfahren sowie ein mobiles Telefon enthaltend Speichermittel, in welchen ein solches Programm codiert ist.

### Hintergrund der Erfindung und Stand der Technik

Mobile Telefone sind aus der Praxis bekannt. Hierunter fallen auch die sogenannten Smartphones, welche vielfältige weitere Funktionen neben der eigentlichen Telekommunikation im engeren Sinne auszuführen in der Lage sind. Solche Smartphones weisen Prozessorsysteme auf, in deren Speichermitteln diverse Anwendungsprogramme, sogenannte Apps, gespeichert werden können.

Mobile Telefone weisen interne Uhren auf, welche die interne Gerätezeit angeben, anzeigen und laufend fortschreiben. Diese interne Gerätezeit ist zum Telefonieren nicht norwendigerweise erforderlich, wird jedoch für viele Funktionen eines mobilen Telefons genutzt, angefangen von Telefon-internen Protokollroutinen, bis hin zum Versand von Zeitinformationen im Rahmen von Anwendungsprogrammen.

Bei manchen Anwendungen ist es wünschenswert, dass eine Überprüfung einer Echtzeit von Ausführungen einer Anwendung feststellbar bzw. rekonstruierbar ist. Dies gilt insbesondere in Fällen, wo im Rahmen einer Anwendung ein Datenstrom innerhalb eines vorgegebenen Zeitfensters an einen Rezipienten gesandt werden muss.

Die dabei entstehende Problematik ist, dass beim Rezipienten eine Echtzeit beispielsweise auf Basis von Atomuhren bzw. hiermit synchronen Zeitsignalen herstellbar und aufrecht erhaltbar ist. Demgegenüber weisen mobile Telefone in aller Regel eigene Zeitnormale auf, welche Ganzabweichungen zu der Echtzeit aufweisen können. Somit kann die Gerätezeit eines mobile telefons beachtlich von der Echtzeit abweichen. Folglich ist eine Übertragung eines Datenstromes vom mobilen Telefon zu einem Rezipienten nicht ohne weiteres als innerhalb eines Zeitfensters erfolgt überprüfbar, wenn der Datenstrom lediglich Daten über den Zeitpunkt einer Betätigung des mobilen Telefons anhand einer Auslesung der Gerätezeit enthält. Dies kann dann letztlich zu fehlerhaften Weiterverarbeitungen solcher Datenströme führen, welche zwar innerhalb eines vorgegebenen Zeitfensters der Echtzeit erzeugt wurden, jedoch eine Gerätezeit enthalten, welche aufgrund von Gangabweichungen außerhalb des Zeitfensters liegt.

### Technisches Problem der Erfindung

Der Erfindung liegt daher das technische Problem zu Grunde, ein Verfahren zur Übertragung von Informationen innerhalb eines vorgegebenen Zeitfensters bereit zu stellen, welches mit hoher Betriebsicherheit gewährleistet, dass innerhalb und außerhalb des Zeitfensters übertragene Informationen beim Recipienten automatisch detektiert bzw. diskriminiert werden.

Insbesondere liegt der Erfindung das Problem zu Grunde, dass gemäß dem Stand der Technik nur der Zeitpunkt des Eingangs eines Datenstroms beim Recipienten erfasst wird und somit auf Grund von Übertragungszeiten bzw. - verzögerungen eine erhebliche Diskrepanz zwischen tatsächlichem Zeitpunkt der Versendung des Datenstroms und dessen Empfangszeit entstehen kann.

Es liegt schließlich auch das Problem zu Grunde, dass die interne Gerätezeit eines mobilen Telefons deutlich von einer Realzeit (beim Recipienten) abweichen kann und insofern auch eine Mitsendung der Gerätezeit im Datenstrom die vorstehende Problematik nicht nur nicht lösen, sondern zum auch die besagte Diskrepanz noch verstärken kann.

### Grundzüge der Erfindung und bevorzugte Ausführungsformen

Zur Lösung dieses technischen Problems lehrt die Erfindung ein Verfahren zur Übertragung einer Information zwischen einem Versender und einem Recipienten mittels eines mobilen,Telefons, wobei das Telefon eine interne Gerätezeit aufweist, wobei der Recipient Mittel zum Empfang von von dem mobilen Telefon versandten Datenströmen, Mittel zum Versenden von Datenströmen an das mobile Telefon, sowie ein internes Zeitnormal aufweist, mit den folgenden Verfahrensschritten: A) das mobile Telefon sendet ein Abfragesignal an den Recipienten, B) auf den Empfang des Abfragesignals liest der Recipient das interne Zeitnormal aus und sendet die ausgelesenen Zeitdaten an das mobile Telefon, C) in dem mobilen Telefon wird eine Zeitdifferenz delta-tl zwischen der internen Gerätezeit und den empfangenen Zeitdaten berechnet und gespeichert, D) in einer in dem mobilen Telefon laufenden Anwendung wird eine Anwendungszeit auf den Wert der internen Gerätezeit minus delta-t1 gesetzt, E) ein mit der Anwendung erzeugter Datenstrom wird auf einen Tastendruck von dem mobilen Telefon an den Recipienten versandt, wobei eine Komponente des Datenstroms die Anwendungszeit zum Zeitpunkt des Tastendrucks umfasst, F) im Recipienten wird die Anwendungszeit aus E) aus dem empfangenen Datenstrom ausgelesen und verglichen mit einer vorgegebenen und im Recipienten gespeicherten Maximalzeit, G) wenn die Anwendungszeit aus Stufe F) früher als die oder gleichzeitig mit der Maximalzeit ist, erfolgt eine Weiterverarbeitung des Datenstroms aus Stufe E) und wenn die Anwendungszeit aus Stufe F) später als die Maximalzeit ist, wird ein erstes Warnsignal erzeugt und dem Datenstrom aus Stufe E) zugeordnet und gespeichert.

Mit der Erfindung wird in Kombination erreicht, dass die Versendung eines Datenstroms gleichsam mit einem "Zeitstempel" im Datenstrom (übertragene Anwendungszeit) durch das mobile Telefon versehen wird, wobei dieser Zeitstempel nicht durch die Gerätezeit, sondern eine an das Zeitnormal des Recipienten angepasste Anwendungszeit gebildet wird. Es wird also die Anwendungszeit gleichsam synchronisiert mit dem Zeitnormal des Recipienten, und nicht die Gerätezeit. Dies ist auch insofern relevant, weil ein Anwender in aller Regel nicht bei jeder Anwendung die Gerätezeit wird synchronisieren wollen. Zudem würde eine Änderung der Gerätezeit zum Zwecke der Generierung eines unzutreffenden Zeitstempels letztlich auch ohne Einfluss bleiben, weil eben die Anwendungszeit synchronisiert wird und nicht die Gerätezeit.

Als Recipient ist eine technische Einrichtung bezeichnet, welche zur bidirektionalen Austausch von Datenströmen mit mobiltelefonen eingerichtet ist. Hierzu gehören neben Sender- und Empfangsmodulen Steuermodule, welche einerseits zum selektiven Datenaustausch mit jeweils einem mobilen Telefon ausgebildet sind, sowie typischerweise Prozessorsysteme, welche recipientenseitige Programme zur Bearbeitung von Anwendungen enthalten. Innerhalb einer Anwnedung findet dann der Datenaustausch zwischen einem bestimmten mobilen Telefon und dem Recipienten statt. Die Selektivität wird dabei beispielsweise anhand der Rufnummer des mobilen Telefons innerhalb des Datenstromes vom mobilen Telefon zum Recipienten gewährleistet.

Das Format der Zeit in der gerätezeit, der Anwendungszeit und dem internen Zeitnormal des Recipienten ist grundsätzlich irrelevant, wesentlich ist nur, dass alle drei Zeiten mit demselben Zeitformat ausgestattet sind. Ein Zeitformat kann beispielsweise die lokale Ortszeit von mobilem Telefon und Recipient sein, also Stunden:Minuten:Sekunden, ggf. ergänzt durch das Datum. Sofern die Ortszeit des mobilen Telefons von jener des Recipienten abweicht, wird dies zudem mit dem erfindungsgemäßen Verfahren berücksichtigt, da die Anwendungszeit entsprechend "korrigiert" wird.

Der Begriff des Zeitfensters bezeichnet dabei eine vorgegebene Maximalzeit. Zusätzlich kann auch eine vorgegebene Minimalzeit als Grenze vorgesehen sein. Für die Minimalzeit gelten dann alle Ausführungen zur Maximalzeit und Vergleiche dazu analog bzw. komplementär.

Die Begriffe einer größeren Zeit und einer späteren Zeit sind synonym. Entsprechend sind die Begriffe einer kleiner Zeit und einer früheren Zeit synonym. Eine Maximalzeit ist dann eine spätest zulässige Zeit und eine Minimalzeit ist eine frühest zulässige Zeit.

Mit den Stufen A) bis C) wird erreicht, dass der Unterschied zwischen der Gerätezeit einerseits und dem internen Zeitnormal des Recipienten im Rahmen einer Anwendung festgestellt und bei der Versendung von Datenströmen durch das mobile Telefon berücksichtigt wird. Ein Vergleich zwischen dem Zeitpunkt einer Betätigung des mobilen Telefons mit einem vorgegebenen Zeitfenster wird dadurch ermöglicht, unabhängig von eventuellen Gangabweichungen der Gerätezeit des mobilen Telefons von dem internen Zeitnormal des Recipienten. Es findet mit anderen Worten ausgedrückt eine Synchronisierung der Anwendungszeit in dem mobilen Telefon mit dem internen Zeitnormal des Recipienten statt, so dass eine Überprüfung, ob eine Betätigung des mobilen Telefons innerhalb einer Anwendung innerhalb eines vorgegebenen Zeitfensters erfolgte, mit hoher Zuverlässigkeit durchgeführt wird und Datenströme entsprechend als "rechtzeitig" oder "nicht rechtzeitig" diskriminiert werden können.

Eine bevorzugte Ausführungsform der Erfindung ist dadurch gekennzeichnet, dass die Stufen A) bis C) mehrfach hintereinander zyklisch wiederholend, insbesondere 2-, 3-, 4- oder 5-fach hintereinander wiederholend, ausgeführt werden und für jeden Zyklus A) bis C) ein testdelta-tl gemessen wird, wobei aus allen gemessenen testdelta-t1 das kleinste testdelta-t1 berechnet und in Stufe D) als delta-t1 eingesetzt wird. Diese Ausführungsform berücksichtigt, dass die Übertragungszeit zwischen mobilem Telefon und Recipient nicht notwendigerweise praktisch null ist. Für hohe Übertragungszeiten können verschiedene Ursachen kausal sein. Beispielsweise kann das Funknetz, in welchem das mobile Telefon betrieben wird, zeitweise aus Kapazitätsgründen überlastet sein. Dies kann zur Verzögerung von Datenströmen in dem Funknetz führen. Solche Verzögerungen können in sehr seltenen Ausnahmefällen mehrere Sekunden, bis zu wenigen Minuten betragen. Im Falle einer solchen Verzögerung würde dann die Anwendungszeit zwar im Rahmen der Stufen A) bis C) auf das interne Zeitnormal des Recipienten synchronisiert, jedoch mit der verbleibenden (unbekannten) Zeitverzögerung bei der Übertragung. Durch die bevorzugte Ausführungsform wird die Wahrscheinlichkeit einer störend langen Übertragungsverzögerung reduziert. Denn es ist unwahrscheinlich, dass in mehreren Zyklen der Atufen A) bis C) jedesmal eine lange Verzögerung der Übertragung stattfindet. Dadurch dass bei dem wiederholten Durchlauf der Stufen A) bis C) eine Minimalwert der Abweichung zwischen Gerätezeit und internem Zeitnormal des Recipienten bestimmt wird, wird die in den Zyklen vorgekommene minimale Übertragungszeit erfasst und berücksichtigt, welche typischerweise im Sekundenbereich, meist weniger als 5 s typischerweise weniger als 3 s, beträgt. Somit ist dann gewährleistet, dass Anwendungszeit und internes zeitnormal des Recipienten maximal um solche Verzögerungszeiten voneinander abweichen.

In einer weiteren Ausführungsform der Erfindung können die Stufen E) bis G) mehrfach jeweils in Zyklen wiederholt werden, wobei für jeden subsequenten Zyklus eine spätere Maximalzeit vorgegeben und im Recipienten gespeichert ist.

Weiterhin bevorzugt ist es, wenn vom Recipienten bei Empfang des Datenstroms in Stufe F) eine Empfangszeit aus dem interne Zeitnormal ausgelesen und wenn die in Stufe F) bestimmte Empfangszeit kleiner oder gleich der Maximalzeit ist, erfolgt eine Weiterverarbeitung des Datenstroms aus Stufe E) und wenn die in Stufe F) bestimmte Empfangszeit größer als die Maximalzeit ist, wird ein zweites Warnsignal erzeugt und dem Datenstrom aus Stufe E) zugeordnet und gespeichert. Mit dieser Variante wird eine zusätzlich Überprüfung in Hinblick auf eine Betätigung innerhalb eines vorgegebenen Zeitfensters gewährleistet. Bei Erzeugung sowohl des ersten Warnsignals als auch des zweiten Warnsignals kann ein finales Warnsignal erzeugt und dem Datenstrom aus Stufe E) zugeordnet werden. Hierdurch wird eine weiter verbesserte Betriebssicherheit erreicht. Insbesondere kann bei vermehrter Erzeugung eines zweiten Warnsignals eine separate Prüfung veranlasst werden. So kann beispielsweise vorgesehen sein, dass wenn das zweite Warnsignal bei mehr als 50% der wiederholten Zyklen E) bis G) erzeugt wird, ein drittes Warnsignal generiert wird, welches einer Bedienperson des Recipienten zur Anzeige gebracht wird, so dass auf Unregelmäßigkeiten und/oder systemischen Übertragungsstörungen im Funknetz geprüft werden kann.

Bei den Vergleichen der Stufen G) bzw. gemäß Anspruch 4 können auch Karenzzeiten vorgesehen sein, i.e. es wird eine maximale Überschreitung der Maximalzeit noch zugelassen, ohne dass ein Warnsignal dadurch ausgelöst wird. Eine solche Karenzzeit liegt vorzugsweise im Bereich von 1 bis 20s, insbesondere 1 bis 10 s, beispielsweise 1 bis 5 s.

Die Erfindung betrifft weiterhin Computerprogramm codierend für die in dem mobilen Telefon auszuführenden Stufen und Stufenkomponenten gemäß einem erfindungsgemäßen Verfahren, gespeichert in Speichermitteln des mobilen Telefons, sowie ein mobiles Telefon, enthaltend ein Prozessorsystem mit Speichermitteln, wobei in den Speichermitteln ein erfindungsgemäßes Programm gespeichert ist.

Im Folgenden wird die Erfindung anhand von nicht limitierenden Ausführungsbeispielen näher erläutert.

### Beispiel 1: Erzeugung von delta-t1 und Generierung der Anwendungszeit.

Auf eine Betätigung, beispielsweise tasten- oder Touchscreenbetätigung des mobilen Telefons im Rahmen einer Anwendung, beispielsweise von einer Bedienperson, welche von der Anwendung zum Zwecke der Initialisierung bzw. Synchronisierung der Anwendung zur dieser Betätigung durch die Anwendung aufgefordert wird, wird von dem mobilen Telefon ein Datenstrom an den recipienten geschickt, welcher für eine Anfrage nach Übertragung von Zeitdaten des internen Zeitnormals des Recipienten codiert. Auf den Empfang dieses Abfragesignals liest der Recipient das interne zeitnormal aus und sendet die ausgelesenen Zeitdaten an das mobile Telefon. In dem mobilen Telefon wird nun die Zeitdifferenz delta-t1 zwischen der internen Gerätezeit und den empfangenen Zeitdaten berechnet. In der laufenden Anwendung wird nunmehr die Anwendungszeit auf den Wert der internen Gerätezeit minus delta-t1 gesetzt, wobei delta-t1 unterschiedliche Vorzeichen haben kann, je nachdem, ob die interne Gerätezeit dem Zeitsignal vorläuft oder nachläuft. Hierbei ergeben sich Verzögerungen und insofern Abweichungen in der Synchronisation zwischen Anwendungszeit und dem internen Zeitnormal des Recipienten eineseits durch Übertragungszeiten im Funknetz und andererseits durch Prozessorzeiten in der Bearbeitung der Programmbefehle. Während letztere praktisch vernachlässigbar sind und in Bereichen unter 1 s liegen, können erstere ls und mehr betragen. Typischerweise werden jedoch 1 bis 5 s nicht überschritten, in Einzelfällen sind längere Übertragungsverzögerungen jedoch nicht auszuschließen.

### Beispiel 2: Erzeugung von delta-t1 und Generierung der Anwendungszeit durch multiple Abfragen.

Um zufällige langzeitige Übertragungszeiten, wie in Beispiel 1 angesprochen, auszuschließen bzw. die Risiken hierfür zu minimieren, werden die Stufen der Abfrage und Zeitdifferenzbestimmung, wie in Beispiel 1 beschrieben, mehrfach ausgeführt. Dies kann 2 bis 5-fach, aber auch bis zu 10-, 20-fach und öfter vorgesehen sein.

Wird nun in der Bestimmung der Zeitdifferenz ein Nachgehen der Gerätezeit des mobilen Telefons gegenüber dem internen Zeitnormal des Recipienten festgestellt, so wird dann die maximale Zeitdifferenz aus den multiplen Bestimmungen der Zeitdifferenzen als delta-t1 festgesetzt und weiter verwendet.

Umgekehrt, wird in der Bestimmung der Zeitdifferenz ein Virgehen der Gerätezeit des mobilen Telefons gegenüber dem internen Zeitnormal des Recipienten festgestellt, so wird dann die minimale Zeitdifferenz aus den multiplen Bestimmungen der Zeitdifferenzen als delta-t1 festgesetzt und weiter verwendet.

Die vorstehenden Zusammenhänge können auch umgekehrt zur Anwendung kommen, je nach gewähltem Vorzeichen der gemessenen Zeitdifferenzen.

### Beispiel 3: Prüfung auf Zeitfensterkompatibilität von Betätigungen des mobilen Telefons

In der Figur 1 sind ingesamt 10 subsequente Betätigungen des mobilen Telefons nach Auführung der Stufen eines der Beispiele 1 oder 2 tabellarisch dargestellt. Die erste Spalte gibt die Reihenfolge der Betätigungen an. Die zweite Spalte zeigt den Zeitpunkt des internen Zeitnormals des Recipienten an, zu welchem die Betätigung erfolgte. Die dritte Spalte gibt den Zeitpunkt der Betätigung gemäß der Anwendungszeit an, Zeitdaten, welche mit dem Datenstrom vom mobilen Telefon an den Recipienten übertragen werden. Die nächsten beiden Spalten geben die vorgegebenen Minimal- und Maximalzeiten für die Betätigung (gemäß dem Zeitnormal) an. In der 6. Spalte ist die Differenz zwischen den Werten der 5. Minus der 3. Spalte angegeben. Da diese alle positv sind, erfolgt kein erstes Warnsignal. Ein erstes Warnsignal würde dagegen ausgelöst, wenn ein Wert in der 6. Spalte negativ wäre. Die 7. Spalte gibt eine hypothetische Übertragungszeit in einem Funknetz an. In der 8. Spalte ist die beim Recipienten nach dessen Zeitnormal gemessene Ankunftszeit des Signals angegeben. In der 9. Spalte ist die Differenz der Zeiten der 5. Spalte minus der 8. Spalte angegeben. Mit einer Ausnahme sind diese positiv und in der einen Ausnahme wird ein zweites Warnsignal ausgelöst. Da jedoch für das 4. Ereignis kein erstes Warnsignal erzeugt wurde, wird das 4. Ereignis als innerhalb des Zeitfensters zulässig eingestuft, i.e. das erste Warnsignal hat Vorrang vor dem zweiten Warnsignal. Dadurch ist gewährleistet, dass gelegentliche lange Übertragungsverzögerungen in einem Funknetz die Ergebnisse der Anwendung nicht negativ beeinflussen.

## Patentansprüche

1. Verfahren zur Übertragung einer Information zwischen einem Versender und einem Recipienten mittels eines mobilen Telefons, wobei das Telefon eine interne Gerätezeit aufweist, wobei der Recipient Mittel zum Empfang von von dem mobilen Telefon versandten Datenströmen, Mittel zum Versenden von Datenströmen an das mobile Telefon, sowie ein internes Zeitnormal aufweist, mit den folgenden Verfahrensschritten:
A) das mobile Telefon sendet ein Abfragesignal an den Recipienten,
B) auf den Empfang des Abfragesignals liest der Recipient das interne Zeitnormal aus und sendet die ausgelesenen Zeitdaten an das mobile Telefon,
C) in dem mobilen Telefon wird eine Zeitdifferenz delta-t1 zwischen der internen Gerätezeit und den empfangenen Zeitdaten berechnet und gespeichert,
D) in einer in dem mobilen Telefon laufenden Anwendung wird eine Anwendungszeit auf den Wert der internen Gerätezeit minus delta-t1 gesetzt,
E) ein mit der Anwendung erzeugter Datenstrom wird auf einen Tastendruck von dem mobilen Telefon an den Recipienten versandt, wobei eine Komponente des Datenstroms die Anwendungszeit zum Zeitpunkt des Tastendrucks umfasst,
F) im Recipienten wird die Anwendungszeit aus E) aus dem empfangenen Datenstrom ausgelesen und verglichen mit einer vorgegebenen und im Recipienten gespeicherten Maximalzeit,
G) wenn die Anwendungszeit aus Stufe F) früher als die oder gleichzeitig mit der Maximalzeit ist, erfolgt eine Weiterverarbeitung des Datenstroms aus Stufe E) und wenn die Anwendungszeit aus Stufe F) später als die Maximalzeit ist, wird ein erstes Warnsignal erzeugt und dem Datenstrom aus Stufe E) zugeordnet und gespeichert.

2. Verfahren nach Anspruch 1, wobei die Stufen A) bis C) mehrfach hintereinander zyklisch wiederholend, insbesondere 2-, 3-, 4- oder 5-fach hintereinander wiederholend, ausgeführt werden und für jeden Zyklus A) bis C) ein testdelta-t1 gemessen wird, wobei aus allen gemessenen testdelta-t1 das kleinste testdelta-t1 berechnet und in Stufe D) als delta-t1 eingesetzt wird.

3. Verfahren nach einem der Ansprüche 1 oder 2, wobei die Stufen E) bis G) mehrfach jeweils in Zyklen wiederholt werden, wobei für jeden subsequenten Zyklus eine spätere Maximalzeit vorgegeben und im Recipienten gespeichert ist.

4. Verfahren nach einem der Ansprüche 1 bis 3, wobei vom Recipienten bei Empfang des Datenstroms in Stufe F) eine Empfangszeit aus dem interne Zeitnormal ausgelesen und wenn die in Stufe F) bestimmte Empfangszeit kleiner oder gleich der Maximalzeit ist, erfolgt eine Weiterverarbeitung des Datenstroms aus Stufe E) und wenn die in Stufe F) bestimmte Empfangszeit größer als die Maximalzeit ist, wird ein zweites Warnsignal erzeugt und dem Datenstrom aus Stufe E) zugeordnet und gespeichert.

5. Verfahren nach einem der Ansprüche 1 bis 4, wobei bei Erzeugung sowohl des ersten Warnsignals als auch des zweiten Warnsignals ein finales Warnsignal erzeugt und dem Datenstrom aus Stufe E) zugeordnet wird.

6. Computerprogramm codierend für die in dem mobilen Telefon auszuführenden Stufen und Stufenkomponenten gemäß einem Verfahren nach einem der Ansprüche 1 bis 5, gespeichert in Speichermitteln des mobilen Telefons.

7. Mobiles Telefon, enthaltend ein Prozessorsystem mit Speichermitteln, wobei in den Speichermitteln ein programm nach Anspruch 6 gespeichert ist.

## Claims

1. A method for transmitting information between a sender and a recipient by means of a mobile phone, wherein the phone has an internal device time, wherein the recipient includes means for receiving data streams sent by the mobile phone, means for sending data streams to the mobile phone, and an internal time standard, comprising the following steps:
A) the mobile phone sends an interrogation signal to the recipient,
B) upon receipt of the interrogation signal, the recipient reads the internal time standard and sends the read time data to the mobile phone,
C) in the mobile phone, a time difference delta-t1 between the internal device time and the received time data is calculated and stored,
D) in an application carried out in the mobile phone, an application time is set to the value of the internal device time minus delta-t1,
E) upon operation of a key, a data stream generated with the application is sent from the mobile phone to the recipient, wherein a component of the data stream comprises the application time at the time of the operation of the key,
F) in the recipient, the application time of E) is read from the received data stream and compared to a predetermined maximum time and stored in the recipient,
G) if the application time of step F) is earlier than or concurrently with the maximum time, further processing of the data stream of step E) occurs, and if the application time of step F) is later than the maximum time, a first warning signal is generated and assigned to the data stream of step E) and is stored.

2. The method according to claim 1, wherein the steps A) to C) are carried out in a multiply cyclically repeating manner, in particular 2, 3, 4 or 5 times repeated one after the other, and for each cycle A) to C) a testdelta-t1 is measured, wherein from all measured testdelta-t1's the smallest testdelta-t1 is calculated and used as delta-tl in step D).

3. The method according to one of claims 1 or 2, wherein the steps E) to G) are multiply repeated in cycles, wherein for each subsequent cycle a later maximum time is predetermined and stored in the recipient.

4. The method according to one of claims 1 to 3, wherein upon receipt of the data stream in step F), a reception time is read by the recipient from the internal time standard, and if the reception time determined in step F) is smaller than or equal to the maximum time, further processing of the data stream of step E) occurs, and if the reception time determined in step F) is greater than the maximum time, a second warning signal is generated and assigned to the data stream of step E) and is stored.

5. The method according to one of claims 1 to 4, wherein upon generation of the first warning signal as well as of the second warning signal, a final warning signal is generated and assigned to the data stream of step E).

6. A computer program coding for the steps and step components to be carried out in the mobile phone according to a method according to one of claims 1 to 5, stored in storage means of the mobile phone.

7. A mobile phone, comprising a processor system with storage means, wherein in the storage means a program according to claim 6 is stored.

## Revendications

1. Procédé de transmission d'une information entre un émetteur et un récepteur au moyen d'un téléphone portable, dans lequel le téléphone a une heure de l'appareil interne, dans lequel le récepteur comporte des moyens pour recevoir des flux de données transmis par le téléphone portable, des moyens pour transmettre des flux de données au téléphone portable, et une base de temps interne, comprenant les étapes suivantes:
A) le téléphone portable transmet un signal d'interrogation au récepteur,
B) à la suite de la réception du signal d'interrogation, le récepteur lit la base de temps interne et transmet les données de temps lues au téléphone portable,
C) dans le téléphone portable, un écart de temps delta-t1 entre l'heure interne de l'appareil et les données de temps reçues est calculé et enregistré,
D) dans une application activée sur le téléphone portable, un temps d'application est réglé à la valeur de l'heure interne de l'appareil moins delta-t1,
E) à la suite de l'appui d'une touche, un flux de données généré par l'application est transmis à partir du téléphone portable au récepteur, dans lequel une composante du flux de données comprend le temps d'application au moment où la touche a été appuyée,
F) dans le récepteur, le temps d'application de l'étape E) est lu à partir du flux de données reçu et comparé avec un temps maximal prédéfini et est enregistré dans le récepteur,
G) si le temps d'application de l'étape F) est antérieur ou égal au temps maximal, le traitement ultérieur du flux de données de l'étape E) a lieu, et si le temps d'application de l'étape F) est postérieur au temps maximal, un premier signal d'alerte est généré et associé au flux de données de l'étape E) et est enregistré.

2. Procédé selon la revendication 1, dans lequel les étapes A) à C) sont réalisées de façon cycliquement répétitive plusieurs fois, en particulier répétées 2, 3, 4 ou 5 fois l'une après l'autre, et pour chaque cycle A) à C) un écart de temps testdelta-t1 est mesuré, dans lequel à partir de tous les écarts de temps testdelta-t1 mesurés, l'écart de temps testdelta-t1 le plus petit est calculé et utilisé comme l'écart de temps delta-t1 dans l'étape D).

3. Procédé selon une des revendications 1 ou 2, dans lequel les étapes E) à G) sont répétées plusieurs fois dans des cycles, dans lequel pour chaque cycle successif un temps maximal postérieur est prédéfini et enregistré dans le récepteur.

4. Procédé selon une des revendications 1 à 3, dans lequel à la suite de la réception du flux de données dans l'étape F), un temps de réception est lu par le récepteur à partir de la base de temps interne, et si le temps de réception déterminé dans l'étape F) est inférieur ou égal au temps maximal, le traitement ultérieur du flux de données de l'étape E) a lieu, et si le temps de réception déterminé dans l'étape F) est supérieur au temps maximal, un deuxième signal d'alerte est généré et associé au flux de données de l'étape E) et est enregistré.

5. Procédé selon une des revendications 1 à 4, dans lequel à la suite de la génération du premier signal d'alerte aussi bien que du deuxième signal d'alerte, un signal d'alerte final est généré et associé au flux de données de l'étape E).

6. Programme d'ordinateur codant pour les étapes et les composantes des étapes à être réalisées dans le téléphone portable selon un procédé selon une des revendications 1 à 5, enregistré dans des moyens d'enregistrement du téléphone portable.

7. Téléphone portable, comprenant un système processeur avec des moyens d'enregistrement, dans lequel dans les moyens d'enregistrement un programme selon la revendication 6 est enregistré.
